# EUROPEAN PATENT APPLICATION

(11) **EP 4 664 257 A1**
(43) Date of publication of application: **17.12.2025**
(21) Application number: 24752865.6
(22) Date of filing: 06.02.2024
(51) Int. Cl.: G06F 3/04845

(54) **INFORMATION GENERATION METHOD AND APPARATUS, INFORMATION DISPLAY METHOD AND APPARATUS, DEVICE AND STORAGE MEDIUM**

(30) Priority: 09.02.2023 CN 202310147540
(71) Applicant: Beijing Zitiao Network Technology Co., Ltd., Beijing 100190 (CN)
(72) Inventor: CHANG, Weiyi, Beijing 100028 (CN)
(74) Representative: Isarpatent
(86) International application number: PCT/CN2024/076191
(87) International publication number: WO 2024/165010

(57) **Abstract**

Provided in the embodiments of the present disclosure are an information generation method and apparatus, an information display method and apparatus, a device and a storage medium. The information generation method comprises: in response to a preset interaction operation for target media content, acquiring first interaction information; on the basis of the first interaction information, determining a first associated picture in the target media content, the first associated picture being an associated picture of the first interaction information; and generating second interaction information corresponding to the first interaction information, the second interaction information being used to be displayed in an associated area of the preset interaction operation, and the second interaction information comprising the first interaction information and first picture information of the first associated picture.

## Description

### CROSS-REFERENCE TO RELATED APPLICATIONS

The present application is based on and claims priority to Chinese Application No. 202310147540.1 filed on Feb. 09, 2023, the disclosure of which is incorporated by reference herein in its entirety.

### TECHNICAL FIELD

Embodiments of the present disclosure relate to the technical field of computers, and in particular an information generation method, an information display method, an apparatus, a device, and a storage medium.

### BACKGROUND

At present, media application programs emerge as the times require, and users can interact with the target media content in the media application programs, such as comment.

However, the existing information generation manners are relatively simple.

### SUMMARY

Embodiments of the present disclosure provide an information generation method, an information display method, an apparatus, a device, and a storage medium, so as to enrich the information generation manners.

According to a first aspect, an embodiment of the present disclosure provides an information generation method, comprising:
acquiring first interactive information in response to a preset interactive operation for a target media content;
determining a first associated picture in the target media content based on the first interactive information, wherein the first associated picture is an associated picture of the first interactive information;
generating second interactive information corresponding to the first interactive information, wherein the second interactive information is used to be presented in an associated area of the preset interactive operation, and the second interactive information contains the first interactive information and first picture information of the first associated picture.

According to a second aspect, an embodiment of the present disclosure provides an information display method, comprising:
receiving a trigger operation for second picture information contained in third interactive information, wherein the third interactive information is interactive information of a target media content, the third interactive information contains picture information of at least one picture, and the second picture information is determined based on a second associated picture in the target media content;
displaying a second picture in response to the trigger operation, wherein the second picture is a picture corresponding to the second picture information.

According to a third aspect, an embodiment of the present disclosure further provides an information generation apparatus, comprising:
an information acquisition module for acquiring first interactive information in response to a preset interactive operation for a target media content;
a picture determination module for determining a first associated picture in the target media content based on the first interactive information, wherein the first associated picture is an associated picture of the first interactive information;
an information generation module for generating second interactive information corresponding to the first interactive information, wherein the second interactive information is used to be presented in an associated area of the preset interactive operation, and the second interactive information contains the first interactive information and first picture information of the first associated picture.

According to a fourth aspect, an embodiment of the present disclosure further provides an information display apparatus, comprising:
an operation reception module for receiving a trigger operation for second picture information contained in third interactive information, wherein the third interactive information is interactive information of a target media content, the third interactive information contains picture information of at least one picture, and the second picture information is determined based on a second associated picture in the target media content;
a picture display module for displaying a second picture in response to the trigger operation, wherein the second picture is a picture corresponding to the second picture information.

According to a fifth aspect, an embodiment of the present disclosure further provides an electronic device, comprising:
one or more processors;
a memory for storing one or more programs;
wherein the one or more programs, when executed by the one or more processors, cause the one or more processors to implement the information generation method or the information display method according to the embodiment of the present disclosure.

According to a sixth aspect, an embodiment of the present disclosure further provides a computer-readable storage medium storing thereon a computer program which, when executed by a processor, implements the information generation method or the information display method according to the embodiment of the present disclosure.

Embodiments of the present disclosure provide an information generation method, an information display method, an apparatus, a device, and a storage medium, and the information generation method comprises: acquiring first interactive information in response to a preset interactive operation for a target media content; determining a first associated picture in the target media content based on the first interactive information, wherein the first associated picture is an associated picture of the first interactive information; generating second interactive information corresponding to the first interactive information, wherein the second interactive information is used to be presented in an associated area of the preset interactive operation, and the second interactive information contains the first interactive information and first picture information of the first associated picture.

### BRIEF DESCRIPTION OF THE DRAWINGS

The above and other features, advantages and aspects of various embodiments of the present disclosure will become more apparent by referring to the following specific implementations when taken in conjunction with the accompanying drawings. Throughout the drawings, the same or similar reference numerals indicate the same or similar elements. It should be understood that the drawings are schematic, and the original and elements are not necessarily drawn to scale.
Fig. 1 is a schematic flow diagram of an information generation method provided by an embodiment of the present disclosure;
Fig. 2 is a schematic diagram of acquiring first interactive information provided by an embodiment of the present disclosure;
Fig. 3 is a schematic diagram of presenting second interactive information provided by an embodiment of the present disclosure;
Fig. 4 is a schematic flow diagram of an information display method provided by an embodiment of the present disclosure;
Fig. 5 is a schematic diagram of displaying a second picture provided by an embodiment of the present disclosure;
Fig. 6 is a schematic flow diagram of an information generation apparatus provided by an embodiment of the present disclosure;
Fig. 7 is a schematic flow diagram of an information display apparatus provided by an embodiment of the present disclosure;
Fig. 8 is a schematic structural diagram of an electronic device provided by an embodiment of the present disclosure.

### DETAILED DESCRIPTION

Embodiments of the present disclosure will be described in more detail below with reference to the accompanying drawings. Although some embodiments of the present disclosure are shown in the drawings, it should be understood that the present disclosure can be implemented in various forms and should not be construed as limited to the embodiments set forth here, but rather, these embodiments are provided for a more thorough and complete understanding of the present disclosure. It should be understood that the drawings and embodiments of the present disclosure are only used for exemplary purposes, and are not used to limit the protection scope of the present disclosure.

It should be understood that the steps described in the method implementation of the present disclosure can be performed in a different order and/or in parallel. Furthermore, the method implementation can include additional steps and/or omit performing the illustrated steps. The scope of the present disclosure is not limited in this respect.

As used herein, the term "including" and its variants are open-ended including, that is, "including but not limited to". The term "based on" is "at least partially based on". The term "one embodiment" means "at least one embodiment"; the term "another embodiment" means "at least one other embodiment"; the term "some embodiments" means "at least some embodiments". Related definitions of other terms will be given in the following description.

It should be noted that "first", "second", and other concepts mentioned in the present disclosure are only used to distinguish different means, modules or units, and are not used to limit the order or interdependence of the functions performed by these means, modules or units.

It should be noted that the modifications of "a" and "a plurality" mentioned in the present disclosure are schematic rather than limiting, and those skilled in the art should understand that unless the context clearly indicates otherwise, they should be understood as "one or a plurality".

Names of messages or information exchanged among a plurality of means in the implementations of the present disclosure are only used for illustrative purposes, and are not used to limit the scope of these messages or information.

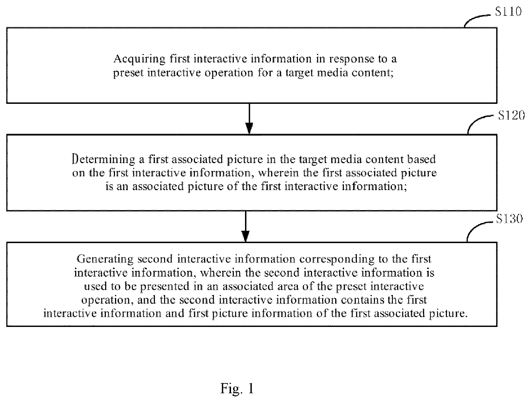

Fig. 1 is a schematic flow diagram of an information generation method provided by an embodiment of the present disclosure. The method can be executed by an information generation apparatus, which can be implemented by software and/or hardware, and can be configured in an electronic device, typically a mobile phone or a tablet computer. The information generation method provided by the embodiment of the present disclosure is applicable to comment or chat scenarios where interactive information is sent. As shown in Fig. 1, the information generation method provided by the present embodiment can include:
S110: acquiring first interactive information in response to a preset interactive operation for a target media content.

The target media content can be understood as a media content corresponding to the preset interactive operation, such as the currently presented media content. The media content can include images, sounds, pictures, texts, animations, etc. For example, the target media content can include a video content, and can also include a picture content and/or a moving picture, etc.

The preset interactive operation can be considered as a previously set interactive operation for interacting with other users or the target media content. For example, the preset interactive operation can be an operation of sending/posting certain information to interact with other users/the target media content. Other users can be users other than the current user, for example, other users can be users associated with the target media content. Illustratively, other users can be users to whom the current user wants to send the second interactive information, which can be a poster of the target media content or users other than the poster of the target media content.

The first interactive information can refer to information that interacts with the content in the target media content, for example, the first interactive information can be information input by the current user in an information input area, which can include texts, etc. The information input area can be associated with the target media content. Illustratively, the information input area can be a comment area of the target media content or an input area for replying to the target media content on a chat interface.

In one implementation, the current user can send chat information to other users to interact with other users for the target media content. For example, the target media content is shared by a share control on a display interface of the target media content or the target media content is replied by reference on the chat interface. The current user can also comment on the target media content in the comment area to interact with the target media content. Illustratively, when the target media content contains a plurality of picture contents, the current user can comment on a certain picture, where the first interactive information can be information of the comment on the picture, and the preset interactive operation is an operation of posting the comment information.

Specifically, this step can acquire the first interactive information in response to a preset interactive operation for a target media content. The manner of acquiring the first interactive information is not limited, for example, the first interactive information input by the current user in the information input area can be acquired after the preset interactive operation is recognized. The information input area can be considered as an area for inputting interactive information, such as an input area for chat information and/or an input area for commenting on interactive information.

In one embodiment, before the acquiring first interactive information in response to a preset interactive operation for target media content, the method further comprises:
displaying at least one first thumbnail, wherein the first thumbnail corresponds to a picture in the target media content;
in response to a trigger operation for a target thumbnail among the at least one first thumbnail, inputting picture identification information of a first picture corresponding to the target thumbnail into the information input area of the target media content.

In the present embodiment, the first thumbnail can refer to the thumbnail corresponding to a picture in the target media content, and the specific content and number of the first thumbnails can be determined according to the content contained in the target media content.

In one embodiment, the method comprises at least one of the following:
the target media content contains a video content, and the at least one first thumbnail comprises a thumbnail corresponding to at least part of video frames in the video content;
the target media content contains a plurality of picture contents, and the at least one first thumbnail comprises a thumbnail corresponding to at least part of pictures in the plurality of picture contents;
the target media content contains at least one moving picture, and the at least one first thumbnail comprises a thumbnail corresponding to at least part of image frames in the at least one moving picture.

In one implementation, the target media content can contain a video content, where the first thumbnail can be a thumbnail corresponding to at least part of video frames in the video content, and then the at least one first thumbnail can include a thumbnail corresponding to at least part of video frames in the video content. Illustratively, the at least part of video frames can be key video frames, and the first thumbnail can be a thumbnail corresponding to the key video frames in the video content.

In one embodiment, the thumbnail corresponding to at least part of video frames in the video content includes a moving picture composed of a plurality of video frames associated with the at least part of video frames.

In one implementation, the thumbnail corresponding to at least part of video frames in the video content can also include a moving picture composed of a plurality of video frames associated with the at least part of video frames. For example, when the at least part of video frames are key video frames, the thumbnail corresponding to the at least part of video frames in the video content can also include a moving picture composed of a plurality of video frames associated with the key video frames.

In one implementation, the target media content can contain a plurality of picture contents, where the first thumbnail can be a thumbnail corresponding to a picture in the video content, and then at least one first thumbnail can include a thumbnail corresponding to at least part of pictures in the video content. Illustratively, when the target media content contains 10 picture contents, then at least one first thumbnail can include a thumbnail corresponding to at least part of pictures in the 10 picture contents.

In one implementation, the target media content can contain at least one moving picture, where the first thumbnail can be a thumbnail corresponding to image frames in the moving picture, and then the at least one first thumbnail can include a thumbnail corresponding to at least part of the image frames in the at least one moving picture. Illustratively, when the target media content contains one moving picture and the moving picture includes three image frames, then the at least one first thumbnail can include a thumbnail corresponding to at least one image frame in the moving picture.

The target thumbnail can be understood as a certain first thumbnail corresponding to a trigger operation of the current user, and the target thumbnail can include one or more target thumbnails. The trigger operation for the target thumbnail is an operation of triggering the target thumbnail, such as an operation of clicking the target thumbnail or an operation of performing a preset gesture on the target thumbnail. The preset gesture can be a previously set gesture, for example, the preset gesture can be a gesture of drawing a circle.

The first picture can refer to a picture corresponding to the target thumbnail in the target media content, and the picture identification information is used to characterize the first picture.

It can be considered that, before acquiring first interactive information in response to a preset interactive operation for a target media content, at least one first thumbnail can be displayed, and the current user can perform a trigger operation on one or several of the first thumbnails (namely, the target thumbnails). When an electronic device or application program recognizes the trigger operation for the target thumbnail, the picture identification information of the first picture corresponding to the target thumbnail can be input into an information input area of the target media content in response to the trigger operation.

The time to display at least one first thumbnail is not limited, for example, at least one first thumbnail can be displayed at a preset time, or at least one first thumbnail can be displayed when a preset operation is recognized. The specific content of the preset operation is not limited and can be set by relevant personnel.

In one embodiment, the displaying at least one first thumbnail includes:
displaying the at least one first thumbnail in response to a trigger operation of inputting a preset character into the information input area of the target media content.

The preset character can refer to a previously set character for displaying the first thumbnail. The specific content of the preset character can be set according to requirements, for example, the preset character can be "di", "picture", "p" or "pick".

Specifically, the at least one first thumbnail can be displayed in response to the trigger operation of inputting the preset character in the information input area of the target media content.

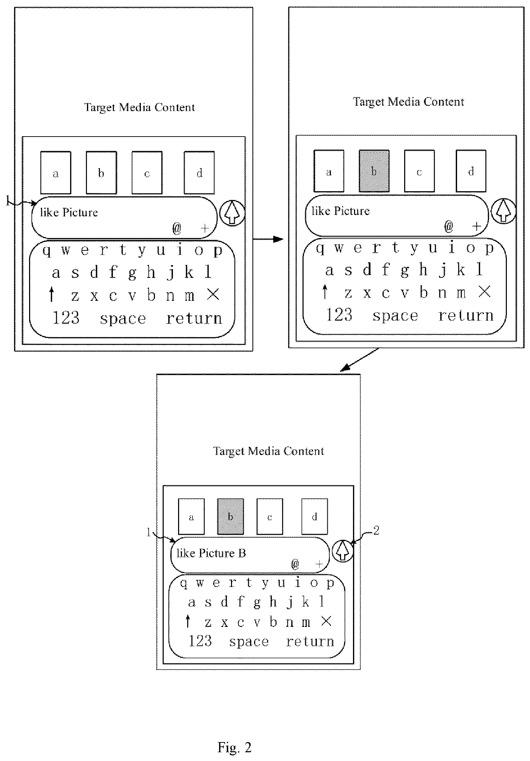

Fig. 2 is a schematic diagram of acquiring the first interactive information provided by an embodiment of the present disclosure. As shown in Fig. 2, when the target media content contains four picture contents and the current user inputs a preset character (such as "picture") in information input area 1 of the target media content, an electronic device can display a first thumbnail a, a first thumbnail b, a first thumbnail c, and a first thumbnail d in the interface in response to the trigger operation of inputting the preset character, wherein, the first thumbnail a corresponds to Picture A in the target media content, the first thumbnail b corresponds to Picture B in the target media content, the first thumbnail c corresponds to Picutre C in the target media content, and the first thumbnail d corresponds to Picture D in the target media content.

Then, the current user can perform a trigger operation on the first thumbnail b (for example, clicking any position of the first thumbnail b). When the electronic device or application program recognizes this trigger operation, it is possible to distinguish a display state (for example, a shadow state) of the first thumbnail b from display states of other thumbnails, and input the picture identification information of Picture B (for example, "B") into the information input area 1 of the target media content.

Subsequently, the current user can click control 2 to perform a preset interactive operation for the target media content, where the electronic device can acquire the first interactive information (such as "like Picture B" as shown in Fig. 2) in response to this preset interactive operation.

S120: determining a first associated picture in the target media content based on the first interactive information, wherein the first associated picture is an associated picture of the first interactive information.

The first associated picture can be considered as an associated picture of the first interactive information. In one embodiment, the first interactive information contains associated information of the first associated picture, and the associated information includes picture description information and/or picture identification information.

In the present embodiment, the first interactive information can contain associated information of the first associated picture, and the associated information can refer to picture information of the first associated picture. The content and input manner of the associated information are not limited, for example, the associated information can include picture description information and/or picture identification information. The picture description information can refer to information describing the first associated picture, for example, the picture description information can be text information. The picture identification information can refer to information identifying the first associated picture, for example, the picture description information can be information describing the picture content of the first associated picture, and the picture identification information can be "Picture B" (as shown in Fig. 2).

This step can determine the first associated picture in the target media content based on the acquired first interactive information, so as to perform the subsequent generation of the second interactive information. The specific means of determining the first associated picture can be, for example, determining the first associated picture based on the content of the first interactive information.

In one embodiment, the associated information is input into an information input area of the target media content by way of character input, and/or the associated information is input into an information input area of the target media content by triggering the thumbnail of the corresponding first associated picture.

In one implementation, the associated information can be input into the information input area of the target media content in different manners, for example, the associated information can be input into the information input area of the target media content by way of character input, which can include using a virtual keyboard, a real keyboard, or other manners of character input.

The associated information can also be input into the information input area of the target media content by triggering the thumbnail of the corresponding first associated picture.

S130: generating second interactive information corresponding to the first interactive information, wherein the second interactive information is used to be presented in an associated area of the preset interactive operation, and the second interactive information contains the first interactive information and first picture information of the first associated picture.

The second interactive information can be considered as information presented in the associated area of the preset interactive operation, for example, the second interactive information can contain the first interactive information and first picture information of the first associated picture. The first picture information is information of the first associated picture, for example, the first picture information can include a second thumbnail of the first associated picture, and the second thumbnail is a thumbnail of the first associated picture.

The associated area can be understood as an area associated with the preset interactive operation, for example, the specific position of the associated area is associated with the application scenario of the preset interactive operation. Illustratively, when the preset interactive operation is applied in a comment scenario, the associated area of the preset interactive operation is a comment area of the target media content; when the preset interactive operation is applied in a chat scenario, the associated area of the preset interactive operation is located in a chat page between the current user and other users.

Specifically, after determining the first associated picture in the target media content, it is possible to generate second interactive information corresponding to the first interactive information, and present the second interactive information in the associated area of the preset interactive operation, so as to accomplish the interaction of the current user with the target media content.

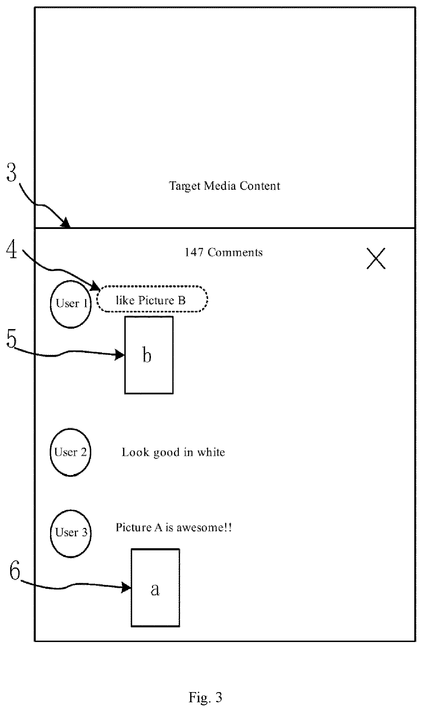

Fig. 3 is a schematic diagram of presenting second interactive information provided by an embodiment of the present disclosure. As shown in Fig. 3 (taking the comment scenario in this figure as an example), the second interactive information can be presented in the associated area of the preset interactive operation (i.e. comment area 3), and the second interactive information contains the first interactive information 4 (i.e. "like Picture B") and first picture information 5 of the first associated picture.

The embodiment of the present disclosure provides an information generation method, comprising: acquiring first interactive information in response to a preset interactive operation for a target media content; determining a first associated picture in the target media content based on the first interactive information, wherein the first associated picture is an associated picture of the first interactive information; generating second interactive information corresponding to the first interactive information, wherein the second interactive information is used to be presented in an associated area of the preset interactive operation, and the second interactive information contains the first interactive information and first picture information of the first associated picture. By using this method, the second interactive information corresponding to the first interactive information is generated, and the second interactive information contains the first interactive information and the first picture information of the first associated picture, so that the generation manners of interactive information can be enriched.

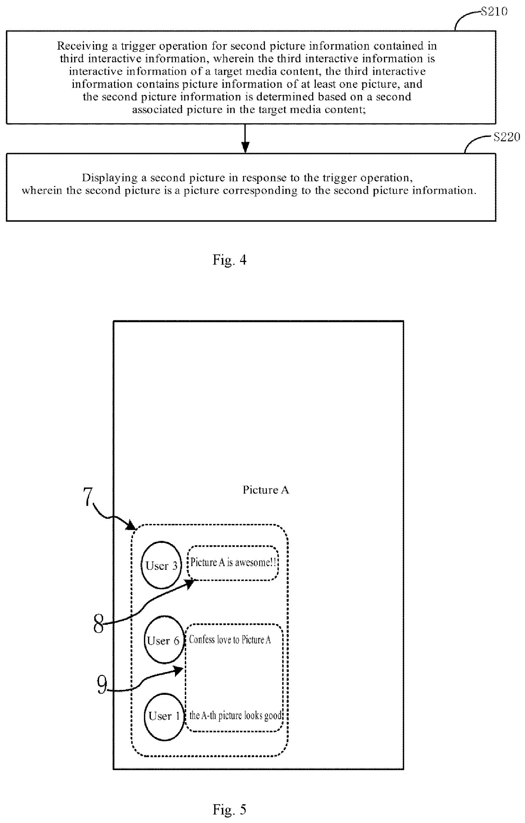

Fig. 4 is a schematic flow diagram of an information display method provided by an embodiment of the present disclosure. The method can be executed by an information display apparatus, wherein the apparatus can be implemented by software and/or hardware, and can be configured in an electronic device, typically, can be configured in a mobile phone or a tablet computer. The information display method provided by the embodiment of the present disclosure is applicable to scenarios where interactive information is displayed. As shown in Fig. 4, the information display method provided by the present embodiment can include:
S210: receiving a trigger operation for second picture information contained in third interactive information, wherein the third interactive information is interactive information of a target media content, the third interactive information contains picture information of at least one picture, and the second picture information is determined based on a second associated picture in the target media content.

The second picture information can be considered as picture information corresponding to the received trigger operation, such as the picture information triggered by the current user, which can be the information of the second associated picture. The second picture information can be determined based on the second associated picture in the target media content, for example, the second picture information can include a thumbnail of the second associated picture, or a moving picture corresponding to the second associated picture. The second picture information can be contained in the third interactive information of the target media content, and the third interactive information can be considered as the interactive information of the target media content. The third interactive information can contain picture information of at least one picture, and can also contain text information, etc. In the present embodiment, the third interactive information can be the same as or different from the second interactive information.

In this step, after the current user performs a trigger operation on the second picture information in the third interactive information of the target media content, the electronic device can receive the trigger operation for the second picture information contained in the third interactive information to respond to the trigger operation. In the present embodiment, the specific operation manner of the trigger operation for the second picture information contained in the third interactive information is not limited, for example, the trigger operation can be an operation of clicking the second picture information, an operation of double-clicking the second picture information, and an operation of performing a preset gesture in the second picture information.

S220: displaying a second picture in response to the trigger operation, wherein the second picture is a picture corresponding to the second picture information.

The second picture can refer to a picture corresponding to the second picture information. Illustratively, the content of the second picture is the same as that of the second associated picture, but the display position and display style of the second picture are different from those of the second associated picture. For example, if the second associated picture is displayed in the target media content, the size of the second associated picture is determined according to the size of the target media content, and the second picture can be presented in the whole media interface and adjusted adaptively according to the actual interface condition of the media interface. Alternatively, the second picture includes a picture associated with the second associated picture, and taking the second picture information being a moving picture corresponding to the second associated picture as an example, the second picture can include a picture corresponding to at least one image frame in the moving picture.

The present embodiment can display the second picture in response to the trigger operation after receiving the trigger operation for the second picture information. The present embodiment does not limit the specific process of displaying the second picture, for example, it can be determined according to the specific content of the second picture information. Other information of the second picture can also be displayed while the second picture is displayed, and can include a serial number, or information associated with the second picture, or the like. It is not limited by the present embodiment.

In one embodiment, the displaying a second picture comprises:
displaying the second picture and first associated interactive information of the second picture, wherein the first associated interactive information comprises interactive information associated with the second picture.

In one implementation, the process of displaying the second picture can be displaying the first associated interactive information of the second picture while displaying the second picture. The first associated interactive information can include interactive information associated with the second picture, for example, the interactive information can be text information and/or picture information associated with the second picture, that is, displaying the first associated interactive information of the second picture can be displaying the text information associated with the second picture, displaying the picture information associated with the second picture, or simultaneously displaying the text information and the picture information associated with the second picture.

In one implementation, the text information associated with the second picture can be understood as the picture description information of the second picture. The picture information associated with the second picture can be the second picture information, that is, the first associated interactive information can contain the second picture information.

In one embodiment, the interactive information associated with the second picture contains at least part of the third interactive information and/or at least part of the fourth interactive information, and the fourth interactive information is different from the third interactive information. The fourth interactive information includes the second picture information determined based on the second associated picture.

In the present embodiment, the fourth interactive information is different from the third interactive information, but the fourth interactive information can include the second picture information, and can also include text information, etc. For example, the fourth interactive information can be interactive information associated with the second associated picture and other than the third interactive information, among the interactive information of the target media content. Taking the comment scenario as an example, the user can trigger the picture information (i.e. the second picture information) in comment interactive information K of the target media content, where the third interactive information can be the comment interactive information K, and the fourth interactive information can be the comment interactive information which is corresponding to the associated picture (i.e. the second associated picture) corresponding to the comment interactive information K and different from the comment interactive information A, among the pieces of comment interactive information of the target media content.

In one implementation, the interactive information associated with the second picture can contain at least part of the third interactive information and/or at least part of the fourth interactive information. For example, the interactive information associated with the second picture can contain a text content of the third interactive information and/or a text content in other interactive information associated with the second associated picture.

Illustratively, if the current user clicks second picture information 6 in Fig. 3, that is, performs a trigger operation for the second picture information 6 contained in the third interactive information, the present embodiment receives and responds to this trigger operation by displaying the second picture. Fig. 5 is a schematic diagram of displaying a second picture provided by an embodiment of the present disclosure. As shown in Fig. 5, first associated interactive information 7 of the second picture can be displayed while the second picture (i.e. Picture A) is being displayed, wherein the first associated interactive information 7 includes interactive information associated with the second picture, such as text content 8 of the third interactive information ("Picture A is awesome" as shown in Fig. 5) and text content 9 in other interactive information associated with the second associated picture ("confession of love to Picture A" and "the A-th picture looks good" as shown in Fig. 5).

The embodiment of the present disclosure provides an information display method, comprising: receiving a trigger operation for second picture information contained in third interactive information, wherein the third interactive information is interactive information of a target media content, the third interactive information contains picture information of at least one picture, and the second picture information is determined based on a second associated picture in the target media content; displaying a second picture in response to the trigger operation, wherein the second picture is a picture corresponding to the second picture information. By using this method, the second picture is displayed in response to the trigger operation for the second picture information, so that users can conveniently check the information quickly, and the efficiency of information display can be improved.

In one embodiment, the second picture information includes at least one moving picture.

It can be considered that in a video scenario, that is, when the target media content contains a video content, the second picture information can include a thumbnail corresponding to part of video frames of the video content, and this thumbnail is a moving picture. Illustratively, a moving picture can be generated according to at least part of video frames contained in a short video content in the video content, or according to at least two key video frames in the video content.

In one embodiment, the moving picture corresponds to a plurality of image frames, and the displaying a second picture comprises:
switching to display a second picture corresponding to each image frame in the moving picture.

In the present embodiment, the moving picture can correspond to a plurality of image frames, then displaying the second picture can be considered as switching to display the second picture corresponding to each image frame in the moving picture. The switching manner can include manual switching and/or automatic switching, and etc. The specific process of switching to display the second picture can be differentiated according to the different target media contents.

In one embodiment, the switching to display a second picture corresponding to each image frame in the moving picture comprises:
switching to display a second picture corresponding to each image frame in the moving picture according to the order of each image frame in the moving picture; or
presenting a target media content segment corresponding to the moving picture in the target media content.

In one implementation, the process of switching to display the second picture corresponding to each image frame in the moving picture can be: switching to display the second picture corresponding to each image frame in the moving picture according to the order of each image frame in the moving picture.

In one implementation, the process of switching to display the second picture corresponding to each image frame in the moving picture can also be: presenting a target media content segment corresponding to the moving picture in the target media content. When each image frame in the moving picture is a video frame in the target media content, the target media content segment can preferably be a video segment containing each image frame in the moving picture in the target media content.

In one embodiment, the switching to display a second picture corresponding to each image frame in the moving picture comprises:
switching to display a second picture corresponding to each image frame in the moving picture, and displaying first associated interactive information of a preset second picture; or
switching to display a second picture corresponding to each image frame in the moving picture, and displaying first associated interactive information of the currently displayed second picture.

The preset second picture can refer to a previously set certain second picture, such as a second picture located at a preset position of a moving picture.

In one implementation, the second picture corresponding to each image frame in the moving picture can correspond to the respective first associated interactive information, so it is possible to display the first associated interactive information of the preset second picture while switching to display the second picture corresponding to each image frame in the moving picture; or display the first associated interactive information of the currently displayed second picture while switching to display the second picture corresponding to each image frame in the moving picture.

In one embodiment, after the displaying the second picture, the method further comprises:
in response to a picture switching operation, switching the currently displayed picture according to the order of each piece of picture information in the third interactive information.

The picture switching operation can be used to switch the currently displayed picture, for example, the picture switching operation can be an operation of sliding the picture.

The third interactive information can contain picture information of a plurality of pictures. In one implementation, after the second picture is displayed, if the current user performs an operation of sliding the second picture, the electronic device can switch to display the currently displayed picture according to the order of each piece of picture information in the third interactive information, in response to the picture switching operation. The specific methods of switching the currently displayed picture are not limited, for example, they can be distinguished according to the specific position of the picture. It is also possible to cyclically switch the pictures characterized in the third interactive information in turn.

In one embodiment, the switching the currently displayed picture comprises:
determining a third picture to which the picture switching operation indicates switching, and executing at least one of the following;
if the third picture is located in the target media content, displaying the third picture and second associated interactive information of the third picture, wherein the second associated interactive information comprises interactive information associated with the third picture;
if the third picture is not located in the target media content, displaying the third picture.

The third picture can be considered as a picture to be switched to display. The third picture can or cannot be located in the target media content, for example, the third picture can be located in the media content adjacent to the target media content or a picture uploaded by the sender/poster of the third interactive information. The second associated interactive information can include interactive information associated with the third picture.

In the present embodiment, in the process of switching the currently displayed picture, it is possible to determine the third picture to which the picture switching operation indicates switching, and differently display the third picture according to different third pictures. Illustratively, if the third picture is located in the target media content, the third picture and the second associated interactive information of the third picture can be displayed simultaneously; if the third picture is not located in the target media content, only the third picture can be displayed.

In one embodiment, the displaying a second picture comprises:
displaying a second picture and suspending presentation of the target media content; or
displaying a second picture and keeping presentation of the target media content.

In one implementation, it is possible to suspend presentation of the target media content while displaying the second picture; or keep presentation of the target media content while displaying the second picture. On this basis, the viewing effect of users is improved.

In one embodiment, the method further comprises:
cancelling the displaying of the currently displayed picture in response to a display cancel operation for the currently displayed picture, and presenting the target media content.

The display cancel operation can refer to an operation of canceling displaying of the currently displayed picture, for example, the display cancel operation can be an operation of clicking a certain control in the interface.

In one implementation, it is possible to cancel the displaying of the currently displayed picture in response to the display cancel operation for the currently displayed picture, and present the target media content.

From the above description, it can be found that the embodiment of the present disclosure can trigger the picture preview by recognizing the current input word, and if the input of a preset character is recognized, all thumbnails of the current picture and text content can appear, and users can be supported to slide-preview and select.

Meanwhile, after selecting one or several thumbnails, the embodiment of the present disclosure can automatically recognize the position number of the current picture, and automatically fill the text corresponding to the selected picture into a comment box. After posting the input text, it is also possible to display the preview image of the selected picture in the associated area in addition to the text content. A user can click the preview image to view.

It should be noted that in the existing technical solution, when checking the comments of a picture and text content and getting interested in a certain picture mentioned in other users' comments, the comments need to be closed to review the corresponding picture, resulting in frequent opening or closing of the comment panel, which is inefficient. Especially when there are a large number of pictures, it is difficult to find the corresponding picture. The embodiment of the present disclosure can quickly find the picture of interest in comments, thus improving efficiency.

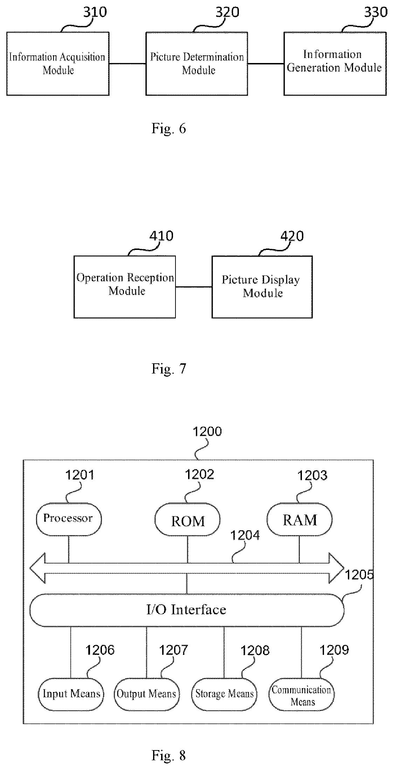

Fig. 6 is a schematic flow diagram of an information generation apparatus provided by an embodiment of the present disclosure. As shown in Fig. 6, the information generation apparatus provided by the present embodiment can include:
an information acquisition module 310 for acquiring first interactive information in response to a preset interactive operation for a target media content;
a picture determination module 320 for determining a first associated picture in the target media content based on the first interactive information, wherein the first associated picture is an associated picture of the first interactive information;
an information generation module 330 for generating second interactive information corresponding to the first interactive information, wherein the second interactive information is used to be presented in an associated area of the preset interactive operation, and the second interactive information contains the first interactive information and first picture information of the first associated picture.

The embodiment of the present disclosure provides an information generation apparatus, which acquires, by an information acquisition module, first interactive information in response to a preset interactive operation for a target media content; determines, by a picture determination module, a first associated picture in the target media content based on the first interactive information, wherein the first associated picture is an associated picture of the first interactive information; generates, by an information generation module, second interactive information corresponding to the first interactive information, wherein the second interactive information is used to be presented in an associated area of the preset interactive operation, and the second interactive information contains the first interactive information and first picture information of the first associated picture. By using this apparatus, the second interactive information corresponding to the first interactive information is generated, and the second interactive information contains the first interactive information and the first picture information of the first associated picture, so that the generation manners of interactive information can be enriched.

Optionally, the first interactive information contains associated information of the first associated picture, and the associated information includes picture description information and/or picture identification information.

Optionally, the associated information is input into the information input area of the target media content by way of character input, and/or the associated information is input into the information input area of the target media content by triggering the thumbnail of the corresponding first associated picture.

Optionally, the information generation apparatus provided by the embodiment of the present disclosure further comprises:
a display module for displaying at least one first thumbnail before the acquiring first interactive information in response to a preset interactive operation for target media content, wherein the first thumbnail corresponds to a picture in the target media content,;
a response module for inputting, in response to a trigger operation for a target thumbnail among the at least one first thumbnail, picture identification information of a first picture corresponding to the target thumbnail into the information input area of the target media content, before the acquiring first interactive information in response to a preset interactive operation for target media content.

Optionally, the display module is specifically used for:
displaying at least one first thumbnail in response to a trigger operation of inputting a preset character into the information input area of the target media content.

Optionally, the information generation apparatus provided by the embodiment of the present disclosure includes at least one of the following:
the target media content contains a video content, and the at least one first thumbnail comprises a thumbnail corresponding to at least part of video frames in the video content;
the target media content contains a plurality of picture contents, and the at least one first thumbnail comprises a thumbnail corresponding to at least part of pictures in the plurality of picture contents;
the target media content contains at least one moving picture, and the at least one first thumbnail comprises a thumbnail corresponding to at least part of image frames in the at least one moving picture.

Optionally, the thumbnail corresponding to at least part of video frames in the video content comprises a moving picture composed of a plurality of video frames associated with the at least part of video frames.

Optionally, the first picture information includes a second thumbnail of the first associated picture.

The information generation apparatus provided by the embodiment of the present disclosure can execute the information generation method provided by any embodiment of the present disclosure, and has corresponding functional modules and beneficial effects for executing the information generation method. For technical details that are not described in detail in the present embodiment, please refer to the information generation method provided by the embodiment of the present disclosure.

Fig. 7 is a schematic flow diagram of an information display apparatus provided by an embodiment of the present disclosure. As shown in Fig. 7, the information display apparatus provided by the present embodiment can include:
an operation reception module 410 for receiving a trigger operation for second picture information contained in third interactive information, wherein the third interactive information is interactive information of a target media content, the third interactive information contains picture information of at least one picture, and the second picture information is determined based on a second associated picture in the target media content;
a picture display module 420 for displaying a second picture in response to the trigger operation, wherein the second picture is a picture corresponding to the second picture information.

The embodiment of the present disclosure provides an information display apparatus, which receives, by an operation reception module, a trigger operation for second picture information contained in third interactive information, wherein the third interactive information is interactive information of a target media content, the third interactive information contains picture information of at least one picture, and the second picture information is determined based on a second associated picture in the target media content; displays, by a picture display module, a second picture in response to the trigger operation, wherein the second picture is a picture corresponding to the second picture information. By using this apparatus, the second picture is displayed in response to the trigger operation for the second picture information, so that users can conveniently check the information quickly, and the efficiency of information display can be improved.

Optionally, the picture display module is specifically used for:
displaying the second picture and first associated interactive information of the second picture, wherein the first associated interactive information includes interactive information associated with the second picture.

Optionally, the first associated interactive information contains the second picture information.

Optionally, the interactive information associated with the second picture contains at least part of the third interactive information and/or at least part of the fourth interactive information, and the fourth interactive information is different from the third interactive information. The fourth interactive information includes the second picture information determined based on the second associated picture.

Optionally, the second picture information includes at least one moving picture.

Optionally, the moving picture corresponds to a plurality of image frames, and the picture display module includes:
a display switching unit for switching to display the second picture corresponding to each image frame in the moving picture.

Optionally, the display switching unit is specifically used for:
switching to display a second picture corresponding to each image frame in the moving picture according to the order of each image frame in the moving picture; or
presenting a target media content segment corresponding to the moving picture in the target media content.

Optionally, the information display apparatus provided by the embodiment of the present disclosure further includes:
a picture switching module for switching, in response to a picture switching operation, the currently displayed picture according to the order of each piece of picture information in the third interactive information, after the displaying a second picture.

Optionally, the picture switching module is specifically used for:
determining a third picture to which the picture switching operation indicates switching, and executing at least one of the following;
if the third picture is located in the target media content, displaying the third picture and second associated interactive information of the third picture, wherein the second associated interactive information comprises interactive information associated with the third picture;
if the third picture is not located in the target media content, displaying the third picture.

Optionally, the picture display module is specifically used for:
displaying a second picture and suspending presentation of the target media content; or
displaying a second picture and keeping presentation of the target media content.

Optionally, the information display apparatus provided by the embodiment of the present disclosure further includes:
a display cancel module for cancelling the displaying of the currently displayed picture in response to a display cancel operation for the currently displayed picture, and presenting the target media content.

The information display apparatus provided by the embodiment of the present disclosure can execute the information display method provided by any embodiment of the present disclosure, and has corresponding functional modules and beneficial effects for executing the information display method. For technical details not described in detail in the present embodiment, please refer to the information display method provided by the embodiment of the present disclosure.

Reference is now made to Fig. 8, which shows a schematic structural diagram of an electronic device 1200 suitable for implementing an embodiment of the present disclosure. The terminal device in the embodiment of the present disclosure can include, but is not limited to, mobile terminals such as a mobile phone, a notebook computer, a digital broadcast receiver, a Personal Digital Assistant (PDA), a Tablet Computer (PAD), a Portable Media Player (PMP), and a vehicle-mounted terminal (such as a vehicle-mounted navigation terminal), as well as fixed terminals such as a digital TV and a desktop computer. The electronic device shown in Fig. 8 is only an example, and should not bring any limitation to the functions and application scope of the embodiment of the present disclosure.

As shown in Fig. 8, the electronic device 1200 can include a processor (such as a central processing unit, or a graphics processor) 1201, which can perform various appropriate actions and processes according to a program stored in a Read-Only Memory (ROM) 1202 or a program loaded from a storage means 1208 into a Random Access Memory (RAM) 1203. In the RAM 1203, various programs and data required for the operation of the electronic device 1200 are also stored. The processor 1201, the ROM 1202 and the RAM 1203 are connected to each other through a bus 1204. An input/output (I/O) interface 1205 is also connected to the bus 1204.

Generally, the following means can be connected to the I/O interface 1205: an input means 1206 including, for example, a touch screen, a touch pad, a keyboard, a mouse, a camera, a microphone, an accelerometer, and a gyroscope; an output means 1207 including, for example, a Liquid Crystal Display (LCD), a speaker, and a vibrator; a storage means 1208 including, for example, a magnetic tape, and a hard disk; and a communication means 1209. The communication means 1209 can allow the electronic device 1200 to communicate wirelessly or by wire with other devices to exchange data. Although Fig. 8 shows the electronic device 1200 with various means, it should be understood that it is not required to implement or provide all the means shown. More or fewer means can alternatively be implemented or provided.

In particular, according to an embodiment of the present disclosure, the process described above with reference to the flow diagram can be implemented as a computer software program. For example, an embodiment of the present disclosure includes a computer program product including a computer program carried on a nontransitory computer-readable medium, which contains program codes for executing the method shown in the flow diagram. In such an embodiment, the computer program can be downloaded and installed from the network through the communication means 1209, or installed from the storage means 1208, or installed from the ROM 1202. When the computer program is executed by the processor 1201, the above functions defined in the method of the embodiment of the present disclosure are performed.

It should be noted that the computer-readable medium mentioned above in the present disclosure can be a computer-readable signal medium or a computer-readable storage medium or any combination of the two. The computer-readable storage medium can be, for example, but not limited to, an electrical, magnetic, optical, electromagnetic, infrared, or semiconductor system, apparatus or device, or a combination of any of the above. More specific examples of the computer-readable storage medium can include, but are not limited to, an electrical connection with one or more wires, a portable computer disk, a hard disk, a Random Access Memory (RAM), a Read-Only Memory (ROM), an Erasable Programmable ROM (EPROM or flash memory), an optical fiber, a portable Compact Disc ROM (CD-ROM), an optical storage device, a magnetic storage device, or any suitable combination of the above. In the present disclosure, the computer-readable storage medium can be any tangible medium containing or storing a program, which can be used by or in combination with an instruction execution system, apparatus or device. In the present disclosure, the computer-readable signal medium can include a data signal propagated in baseband or as part of a carrier wave, in which computer-readable program codes are carried. This propagated data signal can take many forms, including but not limited to an electromagnetic signal, an optical signal or any suitable combination of the above. The computer-readable signal medium can also be any computer-readable medium other than the computer-readable storage medium, which can send, propagate or transmit a program for use by or in connection with an instruction execution system, apparatus or device. The program codes contained in the computer-readable medium can be transmitted by any suitable medium, including but not limited to: wires, optical cables, RF(Radio Frequency), etc., or any suitable combination of the above.

In some implementations, the client and the server can communicate by using any currently known or future developed network protocol such as HyperText Transfer Protocol (HTTP), and can be interconnected with digital data communication in any form or medium (for example, a communication network). Examples of the communication network include Local Area Network ("LAN"), Wide Area Network ("WAN"), Internet (for example, the Internet) and end-to-end networks (for example, ad hoc end-to-end networks), as well as any currently known or future developed networks.

The above computer-readable medium can be contained in the above electronic device; or it can exist alone without being assembled into the electronic device.

The above computer-readable medium carries one or more programs, which, when executed by the electronic device, cause the electronic device to: acquire first interactive information in response to a preset interactive operation for a target media content;
determine a first associated picture in the target media content based on the first interactive information, wherein the first associated picture is an associated picture of the first interactive information;
generate second interactive information corresponding to the first interactive information, wherein the second interactive information is used to be presented in an associated area of the preset interactive operation, and the second interactive information contains the first interactive information and first picture information of the first associated picture.

The above computer-readable medium carries one or more programs, which, when executed by the electronic device, also cause the electronic device to: receive a trigger operation for second picture information contained in third interactive information, wherein the third interactive information is interactive information of a target media content, the third interactive information contains picture information of at least one picture, and the second picture information is determined based on a second associated picture in the target media content;
display a second picture in response to the trigger operation, wherein the second picture is a picture corresponding to the second picture information.

Computer program codes for performing the operations of the present disclosure can be written in one or more programming languages or combinations thereof, including but not limited to object-oriented programming languages, such as Java, Smalltalk, C++, and conventional procedural programming languages, such as "C" language or similar programming languages. The program codes can be completely executed on the user's computer, partially executed on the user's computer, executed as an independent software package, partially executed on the user's computer and partially executed on a remote computer, or completely executed on a remote computer or server. In the case involving a remote computer, the remote computer can be connected to the user's computer through any kind of network, including a local area network (LAN) or a wide area network (WAN), or can be connected to an external computer (for example, through the Internet using an Internet service provider).

The flow diagrams and block diagrams in the drawings illustrate the architecture, functions and operations of possible implementations of the system, the method and the computer program product according to various embodiments of the present disclosure. In this regard, each block in the flow diagrams or block diagrams can represent a module, a program segment, or a part of codes that contains one or more executable instructions for implementing specified logical functions. It should also be noted that in some alternative implementations, the functions noted in the blocks can occur in a different order than those noted in the drawings. For example, two blocks shown in succession can actually be executed substantially in parallel, and they can sometimes be executed in the reverse order, depending on the functions involved. It should also be noted that each or a combination of blocks in the block diagrams and/or flow diagrams can be implemented by a dedicated hardware-based system that performs specified functions or operations, or by a combination of dedicated hardware and computer instructions.

The units involved in the embodiments described in the present disclosure can be implemented by software or hardware. The names of the modules do not constitute the limitations of the units itself in some cases.

The functions described above herein can be at least partially performed by one or more hardware logic components. For example, without limitation, exemplary types of hardware logic components that can be used include: a Field-Programmable Gate Array (FPGA), an Application-Specific Integrated Circuit (ASIC), an Application Specific Standard Product (ASSP), a System on Chip (SOC), a Complex Programmable Logic Device (CPLD) and so on.

In the context of the present disclosure, the machine-readable medium can be a tangible medium that can contain or store a program for use by or in connection with an instruction execution system, apparatus or device. The machine-readable medium can be a machine-readable signal medium or a machine-readable storage medium. the machine-readable medium can include, but is not limited to, an electronic, magnetic, optical, electromagnetic, infrared, or semiconductor system, apparatus or device, or any suitable combination of the above. More specific examples of the machine-readable storage medium can include an electrical connection based on one or more wires, a portable computer disk, a hard disk, a Random Access Memory (RAM), a Read-Only Memory (ROM), an Erasable Programmable Read-Only Memory (EPROM or flash memory), an optical fiber, a convenient Compact Disk Read-Only Memory (CD-ROM), an optical storage device, a magnetic storage device, or any suitable combination of the above.

According to one or more embodiments of the present disclosure, Example 1 provides an information generation method, comprising:
acquiring first interactive information in response to a preset interactive operation for a target media content;
determining a first associated picture in the target media content based on the first interactive information, wherein the first associated picture is an associated picture of the first interactive information;
generating second interactive information corresponding to the first interactive information, wherein the second interactive information is used to be presented in an associated area of the preset interactive operation, and the second interactive information contains the first interactive information and first picture information of the first associated picture.

According to one or more embodiments of the present disclosure, Example 2 is the method according to Example 1, wherein the first interactive information contains associated information of the first associated picture, and the associated information comprises picture description information and/or picture identification information.

According to one or more embodiments of the present disclosure, Example 3 is the method according to Example 2, wherein the associated information is input into an information input area of the target media content by way of character input, and/or the associated information is input into the information input area of the target media content by triggering a thumbnail of the corresponding first associated picture.

According to one or more embodiments of the present disclosure, Example 4 is the method according to Example 3, wherein, before the acquiring first interactive information in response to a preset interactive operation for target media content, the method further comprises:
displaying at least one first thumbnail, wherein the first thumbnail corresponds to a picture in the target media content;
in response to a trigger operation for a target thumbnail among the at least one first thumbnail, inputting picture identification information of a first picture corresponding to the target thumbnail into the information input area of the target media content.

According to one or more embodiments of the present disclosure, Example 5 is the method according to Example 4, wherein, the displaying at least one first thumbnail comprises:
displaying at least one first thumbnail in response to a trigger operation of inputting a preset character into the information input area of the target media content.

According to one or more embodiments of the present disclosure, Example 6 is the method according to Example 4, comprising at least one of:
the target media content contains a video content, and the at least one first thumbnail comprises a thumbnail corresponding to at least part of video frames in the video content;
the target media content contains a plurality of picture contents, and the at least one first thumbnail comprises a thumbnail corresponding to at least part of pictures in the plurality of picture contents;
the target media content contains at least one moving picture, and the at least one first thumbnail comprises a thumbnail corresponding to at least part of image frames in the at least one moving picture.

According to one or more embodiments of the present disclosure, Example 7 is the method according to Example 6, wherein the thumbnail corresponding to at least part of video frames in the video content comprises a moving picture composed of a plurality of video frames associated with the at least part of video frames.

According to one or more embodiments of the present disclosure, Example 8 is the method according to any one of Examples 1-7, wherein the first picture information comprises a second thumbnail of the first associated picture.

According to one or more embodiments of the present disclosure, Example 9 provides an information display method, comprising:
receiving a trigger operation for second picture information contained in third interactive information, wherein the third interactive information is interactive information of a target media content, the third interactive information contains picture information of at least one picture, and the second picture information is determined based on a second associated picture in the target media content;
displaying a second picture in response to the trigger operation, wherein the second picture is a picture corresponding to the second picture information.

According to one or more embodiments of the present disclosure, Example 10 is the method according to Example 9, wherein the displaying a second picture comprises:
displaying the second picture and first associated interactive information of the second picture, wherein the first associated interactive information comprises interactive information associated with the second picture.

According to one or more embodiments of the present disclosure, Example 11 is the method according to Example 10, wherein the first associated interactive information contains the second picture information.

According to one or more embodiments of the present disclosure, Example 2 is the method according to Example 10, wherein the interactive information associated with the second picture contains at least part of the third interactive information and/or at least part of the fourth interactive information, the fourth interactive information is different from the third interactive information, and the fourth interactive information comprises the second picture information determined based on the second associated picture.

According to one or more embodiments of the present disclosure, Example 13 is the method according to Example 9, wherein the second picture information comprises at least one moving picture.

According to one or more embodiments of the present disclosure, Example 14 is the method according to Example 13, wherein the moving picture corresponds to a plurality of image frames, and the displaying a second picture comprises:
switching to display a second picture corresponding to each image frame in the moving picture.

According to one or more embodiments of the present disclosure, Example 15 is the method according to Example 14, wherein the switching to display a second picture corresponding to each image frame in the moving picture comprises:
switching to display a second picture corresponding to each image frame in the moving picture according to an order of each image frame in the moving picture; or
presenting a target media content segment corresponding to the moving picture in the target media content.

According to one or more embodiments of the present disclosure, Example 16 is the method according to Example 9, wherein, after the displaying a second picture, the method further comprises:
in response to a picture switching operation, switching the currently displayed picture according to an order of each piece of picture information in the third interactive information.

According to one or more embodiments of the present disclosure, Example 17 is the method according to Example 16, wherein the switching the currently displayed picture comprises:
determining a third picture to which the picture switching operation indicates switching, and executing at least one of the following;
if the third picture is located in the target media content, displaying the third picture and second associated interactive information of the third picture, wherein the second associated interactive information comprises interactive information associated with the third picture;
if the third picture is not located in the target media content, displaying the third picture.

According to one or more embodiments of the present disclosure, Example 18 is the method according to t any one of Examples 9-17, wherein the displaying a second picture comprises:
displaying a second picture and suspending presentation of the target media content; or
displaying a second picture and keeping presentation of the target media content.

According to one or more embodiments of the present disclosure, Example 19 is the method according to any one of Examples 9-17, further comprising:
cancelling the displaying of the currently displayed picture in response to a display cancel operation for the currently displayed picture, and presenting the target media content.

According to one or more embodiments of the present disclosure, Example 20 provides an information generation apparatus, comprising:
an information acquisition module for acquiring first interactive information in response to a preset interactive operation for a target media content;
a picture determination module for determining a first associated picture in the target media content based on the first interactive information, wherein the first associated picture is an associated picture of the first interactive information;
an information generation module for generating second interactive information corresponding to the first interactive information, wherein the second interactive information is used to be presented in an associated area of the preset interactive operation, and the second interactive information contains the first interactive information and first picture information of the first associated picture.

According to one or more embodiments of the present disclosure, Example 21 provides an information display apparatus comprising:
an operation reception module for receiving a trigger operation for second picture information contained in third interactive information, wherein the third interactive information is interactive information of a target media content, the third interactive information contains picture information of at least one picture, and the second picture information is determined based on a second associated picture in the target media content;
a picture display module for displaying a second picture in response to the trigger operation, wherein the second picture is a picture corresponding to the second picture information.

According to one or more embodiments of the present disclosure, Example 22 provides an electronic device comprising:
one or more processors;
a memory for storing one or more programs,
wherein the one or more programs, when executed by the one or more processors, cause the one or more processors to implement the information generation method according to any one of Examples 1-8 or the information display method according to any one of Examples 9-19.

According to one or more embodiments of the present disclosure, Example 23 provides a computer-readable storage medium storing thereon a computer program which, when executed by a processor, implements the information generation method according to any one of Examples 1-8 or the information display method according to any one of Examples 9-19.

The above description is only the preferred embodiments of the present disclosure and the explanation of the applied technical principles. It should be understood by those skilled in the art that the disclosure scope involved in the present disclosure is not limited to the technical solution formed by the specific combination of the above technical features, but also covers other technical solutions formed by any combination of the above technical features or their equivalent features without departing from the above disclosure concept, for example, the technical solution formed by mutual replacement of the above features and the technical features with similar functions disclosed in (but not limited to) the present disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of an individual embodiment can also be combined in a single embodiment. On the contrary, various features described in the context of a single embodiment can also be implemented in multiple embodiments individually or in any suitable sub-combination.

Although the subject matter has been described in language specific to structural features and/or methodological logical actions, it should be understood that the subject matter defined in the appended Claims is not necessarily limited to the specific features or actions described above. On the contrary, the specific features and actions described above are only exemplary forms of implementing the Claims.

## Claims

1. An information generation method, comprising:
acquiring first interactive information in response to a preset interactive operation for a target media content;
determining a first associated picture in the target media content based on the first interactive information, wherein the first associated picture is an associated picture of the first interactive information; and
generating second interactive information corresponding to the first interactive information, wherein the second interactive information is used to be presented in an associated area of the preset interactive operation, and the second interactive information contains the first interactive information and first picture information of the first associated picture.

2. The method according to Claim 1, wherein the first interactive information contains associated information of the first associated picture, and the associated information comprises picture description information and/or picture identification information.

3. The method according to Claim 2, wherein the associated information is input into an information input area of the target media content by way of character input, and/or the associated information is input into the information input area of the target media content by triggering a thumbnail of the corresponding first associated picture.

4. The method according to Claim 3, wherein, before the acquiring first interactive information in response to a preset interactive operation for target media content, the method further comprises:
displaying at least one first thumbnail, wherein the first thumbnail corresponds to a picture in the target media content;
in response to a trigger operation for a target thumbnail among the at least one first thumbnail, inputting picture identification information of a first picture corresponding to the target thumbnail into the information input area of the target media content.

5. The method according to Claim 4, wherein the displaying at least one first thumbnail comprises:
displaying at least one first thumbnail in response to a trigger operation of inputting a preset character into the information input area of the target media content.

6. The method according to Claim 4, wherein the method comprises at least one of:
the target media content contains a video content, and the at least one first thumbnail comprises a thumbnail corresponding to at least part of video frames in the video content;
the target media content contains a plurality of picture contents, and the at least one first thumbnail comprises a thumbnail corresponding to at least part of pictures in the plurality of picture contents;
the target media content contains at least one moving picture, and the at least one first thumbnail comprises a thumbnail corresponding to at least part of image frames in the at least one moving picture.

7. The method according to Claim 6, wherein the thumbnail corresponding to at least part of video frames in the video content comprises a moving picture composed of a plurality of video frames associated with the at least part of video frames.

8. The method according to any one of Claims 1 to 7, wherein the first picture information comprises a second thumbnail of the first associated picture.

9. An information display method, comprising:
receiving a trigger operation for second picture information contained in third interactive information, wherein the third interactive information is interactive information of a target media content, the third interactive information contains picture information of at least one picture, and the second picture information is determined based on a second associated picture in the target media content; and
displaying a second picture in response to the trigger operation, wherein the second picture is a picture corresponding to the second picture information.

10. The method according to Claim 9, wherein the displaying a second picture comprises:
displaying the second picture and first associated interactive information of the second picture, wherein the first associated interactive information comprises interactive information associated with the second picture.

11. The method according to Claim 10, wherein the first associated interactive information contains the second picture information.

12. The method according to Claim 10, wherein the interactive information associated with the second picture contains at least part of the third interactive information and/or at least part of the fourth interactive information, the fourth interactive information is different from the third interactive information, and the fourth interactive information comprises the second picture information determined based on the second associated picture.

13. The method according to Claim 9, wherein the second picture information comprises at least one moving picture.

14. The method according to Claim 13, wherein the moving picture corresponds to a plurality of image frames, and the displaying a second picture comprises:
switching to display a second picture corresponding to each image frame in the moving picture.

15. The method according to Claim 14, wherein the switching to display a second picture corresponding to each image frame in the moving picture comprises:
switching to display a second picture corresponding to each image frame in the moving picture according to an order of each image frame in the moving picture; or
presenting a target media content segment corresponding to the moving picture in the target media content.

16. The method according to Claim 9, wherein, after the displaying a second picture, the method further comprises:
in response to a picture switching operation, switching the currently displayed picture according to an order of each piece of picture information in the third interactive information.

17. The method according to Claim 16, wherein, the switching the currently displayed picture comprises:
determining a third picture to which the picture switching operation indicates switching, and executing at least one of the following:
if the third picture is located in the target media content, displaying the third picture and second associated interactive information of the third picture, wherein the second associated interactive information comprises interactive information associated with the third picture;
if the third picture is not located in the target media content, displaying the third picture.

18. The method according to any one of Claims 9 to 17, wherein the displaying a second picture comprises:
displaying a second picture and suspending presentation of the target media content; or
displaying a second picture and keeping presentation of the target media content.

19. The method according to any one of Claims 9 to 17, further comprising:
cancelling the displaying of the currently displayed picture in response to a display cancel operation for the currently displayed picture, and presenting the target media content.

20. An information generation apparatus, comprising:
an information acquisition module for acquiring first interactive information in response to a preset interactive operation for a target media content;
a picture determination module for determining a first associated picture in the target media content based on the first interactive information, wherein the first associated picture is an associated picture of the first interactive information;
an information generation module for generating second interactive information corresponding to the first interactive information, wherein the second interactive information is used to be presented in an associated area of the preset interactive operation, and the second interactive information contains the first interactive information and first picture information of the first associated picture.

21. An information display apparatus, comprising:
an operation reception module for receiving a trigger operation for second picture information contained in third interactive information, wherein the third interactive information is interactive information of a target media content, the third interactive information contains picture information of at least one picture, and the second picture information is determined based on a second associated picture in the target media content;
a picture display module for displaying a second picture in response to the trigger operation, wherein the second picture is a picture corresponding to the second picture information.

22. An electronic device, comprising:
at least one processor; and
a memory communicatively connected to the at least one processor; wherein,
the memory stores a computer program executable by the at least one processor, and the computer program is executed by the at least one processor, so that the at least one processor can execute the information generation method according to any one of Claims 1 to 8 or the information display method according to any one of Claims 9 to 19.

23. A computer-readable storage medium, wherein the computer-readable storage medium stores computer instructions which are used to cause a processor, when executing the computer instructions, to implement the information generation method according to any one of Claims 1 to 8 or the information display method according to any one of Claims 9 to 19.
